# EUROPÄISCHE PATENTSCHRIFT

(11) **EP 2 085 679 B1**
(45) Veröffentlichungstag und Bekanntmachung des Hinweises auf die Patenterteilung: **27.02.2013**
(21) Anmeldenummer: 09001008.3
(22) Anmeldetag: 26.01.2009
(51) Int. Cl.: F16M 7/00, B23Q 1/00

(54) **Verstellfuß**
Adjustment foot
Pied de réglage

(30) Priorität: 01.02.2008 DE 102008007125
(43) Veröffentlichungstag der Anmeldung: 05.08.2009
(73) Patentinhaber: Hofmann, Edwin, 76646 Bruchsal (DE)
(72) Erfinder: Hofmann, Edwin, 76646 Bruchsal (DE)
(74) Vertreter: Clemens, Gerhard

(56) Entgegenhaltungen:
- EP-A- 0 543 046
- EP-A- 0 783 855
- WO-A-03/036156
- DE-A1- 3 430 710
- US-A1- 2006 266 896

## Beschreibung

### TECHNISCHES GEBIET

Die vorliegende Erfindung betrifft einen Verstellfuß, mit dem eine Vorrichtung, wie beispielsweise eine Werkzeugmaschine, auf einer Oberfläche aufgestellt werden kann. Der Verstellfuß dient dabei sowohl zur Einstellung einer gewünschten Höhe, als auch zur Nivellierung der Werkzeugmaschine. Derartige Verstellfüße werden beispielsweise als Maschinenfüße für Produktionsvorrichtungen oder Förderbänder eingesetzt. Beim Betrieb entsprechender Vorrichtungen entstehen regelmäßig hohe dynamische Kräfte, die über die Verstellfüße so weit wie möglich abgeleitet werden müssen, um Eigenschwingungen der Vorrichtungen zu vermeiden.

### STAND DER TECHNIK

Beispielsweise ist aus der DE 20 2004 008 091 U1 ein als Verbindungselement für einen Maschinenfuß bezeichneter Verstellfuß bekannt, der eine Gewindestange aufweist, dessen eines Ende ein metrisches Gewinde besitzt und an dessen anderem Ende eine Kugelkopffläche vorhanden ist. Diese Kugelkopffläche ist mittels einer Befestigungsschraube mit einem entsprechend konkav ausgeführten Teller verbunden, welcher als Stellfläche dient. Die Befestigungsschraube sitzt vertieft in einer unteren Ausnehmung des Tellers. Das metrische Gewinde der Gewindestange kann in eine dafür in der aufzustellenden Vorrichtung vorgesehenen Gewindebohrung eingeschraubt werden. Eine Höhenverstellung bedingt ein Austauschen der vorhandenen Gewindestange gegen eine entsprechend längere oder kürzere Gewindestange.

Die Gewichtsbelastung des Verstellfußes durch die aufzustellende Vorrichtung wird ausschließlich von der relativ dünnen Gewindestange aufgenommen. Dadurch ergeben sich Belastungsgrenzen, weshalb derartige Verstellfüße vornehmlich bei vergleichsweise leichten Stahlkonstruktionen im Anlagenbau ihren Anwendungsbereich finden. Als Verstellfüße für schwerere Maschinen oder Aggregate des Maschinenbaus sind solche Verstellfüße dagegen nicht geeignet.

Eine vergleichbare Belastungsproblematik tritt auch bei dem aus der DE 10 2006 021 762 A1 bekannten Maschinenfuß für einen Bestückungsautomaten auf. Auch hier dient der zum Befestigen eines Grundkörpers an einem Maschinenchassis verwendete Gewindebolzen gleichzeitig zur Lastübertragung.

Die aus der DE 42 37 981 A1 bekannte Schraubeinheit stellt eine Art höhenverstellbare Unterlegscheibe dar, mittels der beispielsweise ein Motorfuß mit Abstand an einer Konsole festgeschraubt werden kann. Die Unterlegscheibe besitzt dabei eine Schraubenmutter, die auf einen Schraubenzapfen unterschiedlich weit aufgedreht werden kann. Mittels einer auch durch den Motorfuß und die Konsole hindurchreichenden Befestigungsschraube wird die Unterlegscheibe zwischen dem Motorfuß und der Konsole eingeklemmt gehalten. Zum Verstellen der Schraubeinheit muss zuerst die Befestigungsschraube gelöst und dadurch die Verspannung der Schraubeinheit zwischen dem Motorfuß und der Konsole aufgehoben werden.

Darüber hinaus ist aus der EP 0 783 855 A1 eine alternative Fussanordnung bekannt.

### DARSTELLUNG DER ERFINDUNG

Ausgehend vom vorliegenden Stand der Technik liegt der Erfindung die Aufgabe zugrunde, einen verbesserten Verstellfuß anzugeben, der eine einfache und sichere Höheneinstellung ermöglicht und auch hohe Belastungen sicher aufnehmen kann.

Die Erfindung ist durch die Merkmale des Hauptanspruchsgegeben. Sinnvolle Weiterbildungen der Erfindung sind Gegenstand von sich an den Hauptanspruch anschließenden weiteren Ansprüchen.

Der erfindungsgemäße Verstellfuß besitzt ein Verstellfuß- Unterteil und ein Verstellfuß-Oberteil mit einer durchgehenden Ausnehmung in Längsrichtung. Innerhalb dieser durchgehenden Ausnehmung kann eine vergleichsweise schwach dimensionierte Befestigungsschraube vorgesehen werden, um das Verstellfuß-Oberteil an der aufzustellenden Vorrichtung zu befestigen. Verstellfuß-Unterteil und Verstellfuß-Oberteil weisen eine davon unabhängige, beliebig stark dimensionierte andere gegenseitige Verschraubung auf. Diese Verschraubung kann ohne Lösen der Befestigungsschraube geändert und damit auf einfache Weise eine Höhenverstellung vorgenommen werden.

Die Befestigungsschraube kann auch während des Aufstellens bereits angeschraubt vorhanden sein, da die Höheneinstellung unabhängig davon ausgeführt werden kann. Die Höheneinstellung erfolgt damit ausschließlich über den Verstellfuß außerhalb der aufzustellenden Vorrichtung, eine separate Gewindestange wird dadurch überflüssig. Dadurch kann der Verstellfuß auch relativ hohe Belastungen sicher aufnehmen und durch Schwingungen verursachte dynamische Kräfte sicher an den Untergrund ableiten und eine exakte Höheneinstellung gewährleisten, die auch bei unbeabsichtigten Störungen oder bei auftretenden Schwingungen erhalten bleibt.

Bei der erfindungsgemäßen Vorrichtung kann die Länge und Dicke der Befestigungsschraube relativ frei gewählt werden, da diese lediglich in dem Verstellfuß-Oberteil positioniert wird. Damit ist der Verstellfuß lastmäßig unabhängig vom Gewinde der Gewindebohrung der aufzustellenden Vorrichtung und kann somit individuell an die jeweiligen Gegebenheiten angepasst werden.

In einer ersten bevorzugten Ausführungsform kann der untere Randbereich des Verstellfuß-Unterteils als Stellfläche ausgebildet sein, die auf einer Oberfläche positioniert werden kann. Das Verstellfuß-Unterteil kann damit ohne weitere Vorkehrungen direkt auf der Oberfläche aufgestellt werden.

In einer zweiten, alternativen bevorzugten Ausführungsform kann der untere Randbereich des Verstellfuß-Unterteils konvex ausgebildet sein und an einem konkav ausgebildeten Bereich eines Stelltellers befestigt werden. Dadurch können Unebenheiten der Oberfläche ausgeglichen werden und der Verstellfuß kann auch bei unebenen Oberflächen eine sichere Auflage bieten. Die Befestigung kann dabei insbesondere so erfolgen, dass ein Verkippen des Stelltellers vom Verstellfuß-Untertei um einen bestimmten Winkel in alle Richtungen möglich ist, der Verstellfuß also ohne weitere Maßnahmen auf einer schiefen Oberfläche aufgestellt werden kann. Der Verstellfuß kann somit gelenkförmig ausgebildet sein.

Die Befestigung von Verstellfuß-Unterteil an dem Stellteller kann dabei vorzugsweise so ausgebildet sein, dass am unteren Bereich des Verstellfuß-Unterteils eine zylindrische Ausdrehung mit einem anschließenden Bund vorhanden ist und am konkaven Bereich des Stellteller ein Bund mit einer Freidrehung vorhanden ist. Insbesondere können der Bund des Verstellfuß-Unterteils und der Bund des Stelltellers den gleichen Nenndurchmesser aufweisen. Vorzugsweise können der Bund des Verstellfuß-Unterteils und der Bund des Stelltellers zusätzlich oder alternativ dazu jeweils eine Anfasung aufweisen. Durch diese Ausbildung von Verstellfuß-Unterteil und Stellteller kann das Verstellfuß-Unterteil in den Stellteller von oben eingepresst werden und dann eine Einheit bilden.

Damit eine möglichst exakte Einstellung der Höhe durchgeführt werden kann und diese auch gegen unbeabsichtigte Manipulationen geschützt ist, kann das Gewinde von Verstellfuß-Oberteil und von Verstellfuß-Unterteil vorzugsweise jeweils als metrisches Feingewinde, das vorzugsweise selbsthemmend ausgebildet ist, ausgebildet sein.

Sofern mit unbeabsichtigten Störungen oder Schwingungen gerechnet werden muss, die die Einstellung beeinflussen könnten; kann bei beiden alternativen Ausführungsformen jeweils eine Sicherung durch eine Kontermutter vorgesehen werden.

Gegen eine unzulässige Verstellung über die maximale Verstellhöhe hinaus können insbesondere am Ende des Gewindezapfens des Verstellfuß-Oberteils Verstemmungen vorgenommen sein.

Weitere Vorteile und Merkmale der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschreiben und erläutert. Es zeigen:
- Fig. 1: einen Längsschnitt durch ein erstes Ausführungsbeispiel eines erfindungsgemäßen Verstellfußes gemäß der Linie 1-1 in Fig. 3,
- Fig. 2: eine Draufsicht auf den Verstellfuß gemäß Fig. 1,
- Fig. 3: eine Schnittdarstellung längs der Linie 3-3 in Fig. 1,
- Fig. 4: einen mit Fig. 1 vergleichbaren Längsschnitt durch ein zweites Ausführungsbeispiel eines erfindungsgemäßen Verstellfußes,
- Fig. 5: eine Detailansicht des erfindungsgemäßen Verstellfußes gemäß Fig. 4,
- Fig. 6: eine weitere Detailansicht des auf einer schiefen Aufstellfläche aufsitzenden erfindungsgemäßen Verstellfußes gemäß Fig. 4,
- Fig. 7: einen Längsschnitt durch den unteren Teil eines dritten erfindungsgemäßen Verstellfußes, mit einem Runddraht-Sprengring, und
- Fig. 8: einen Teil-Längsschnitt durch ein viertes Ausführungsbeispiel eines erfindungsgemäßen Verstellfußes, mit Kontermutter.

### WEGE ZUM AUSFÜHREN DER ERFINDUNG

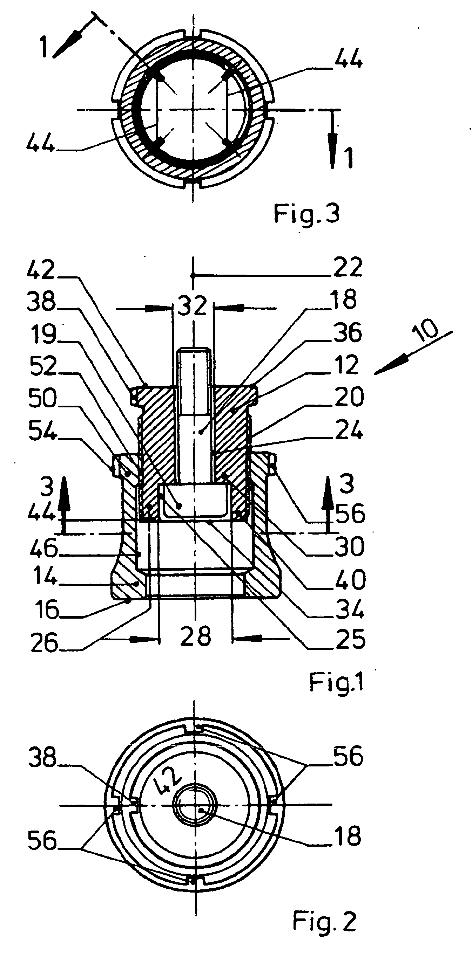

Ein erstes Ausführungsbeispiel eines erfindungsgemäßen Verstellfußes 10 ist in den Fig. 1 bis 3 dargestellt. Der Verstellfuß 10 besitzt ein Verstellfuß-Oberteil 12 und ein Verstellfuß-Unterteil 14, das mit seiner Stellfläche 16 auf einer hier nicht dargestellten Oberfläche aufgestellt werden kann.

Das Verstellfuß-Oberteil 12 ist im vorliegenden Beispielsfall im Wesentlichen kernförmig ausgebildet und weist ein metrisches Außengewinde 20 auf. Das metrische Außengewinde 20 endet in einem zylindrischen Bereich 40.

In Längsrichtung 22 ist im Verstellfuß-Oberteil 12 eine durchgehende Ausnehmung 24 mit einer Verbreiterung 25 in ihrem unteren Bereich 26 vorhanden. Der Durchmesser 28 des unteren Bereichs 26 der durchgehenden Ausnehmung 24 ist größer als der Durchmesser 32 des oberen Bereichs 30 der Ausnehmung 24. In der durchgehenden Ausnehmung 24 des Verstellfuß-Oberteils 12 kann somit eine Befestigungsschraube 18 mit ihrem Schraubenkopf 19 in der Verbreiterung 25 einsitzend, positioniert werden. Der Kopf 19 dieser Befestigungsschraube 18 ragt im vorliegenden Beispielsfall nicht über die Unterkante 34 des Verstellfuß-Oberteils 12 hinaus.

Der obere Rand des Verstellfuß-Oberteils 12 weist einen überstehenden Anschlagbund 36 auf, in dem im vorliegenden Beispielsfall eine Nut 38 vorhanden ist. Diese Nut 38 kann zur Verdrehsicherung benutzt werden. Die Anzahl der Nute 38 kann dabei grundsätzlich dem Durchmesser des Verstellfußes 10 angepasst werden.

Das Verstellfuß-Unterteil 14 ist im vorliegenden Beispielsfall im Wesentlichen hülsenförmig ausgebildet. Der obere Randbereich 50 des Verstellfuß-Unterteils 14 weist ein metrischen Innengewinde 52 auf, das mit einer Freidrehung 46 endet und zum Außengewinde 20 des Verstellfuß-Oberteils 12 passt.

Der obere Randbereich 50 weist einen durchgehenden, nach außen weisenden Verstellbund 54 auf, in dem mehrere, im vorliegenden Beispielsfall vier, Nute 56 vorhanden sind. Die Größe der Nute 56 entspricht einer Norm-Wellenmutter, so dass eine Höheneinstellung bequem mittels eines Hakenschlüssel erfolgen kann. Alternativ dazu könnte der Verstellbund 54 auch beispielsweise mit einem Sechskant oder Vierkant ausgeführt werden; in diesem Fall käme dann ein entsprechender Maulschlüssel zur Anwendung.

Nach dem Zusammenschrauben von Verstellfuß-Oberteil 12 und Verstellfuß-Unterteil 14 kann der zylindrische Bereich 40 am Ende des Außengewindes 20 des Verstellfuß-Oberteils 12 beispielsweise mit einem Flachstemmer verstemmt werden. Die Anzahl der Verstemmungen 44 kann an den Durchmesser des Verstellfußes 10 angepasst werden, im vorliegenden Beispielsfall sind vier Verstemmungen 44 vorhanden. Durch diese Verstemmungen 44 ist ein unzulässiges Herausdrehen des Verstellfuß-Oberteils 12 über die maximale Verstellhöhe nicht möglich.

Zum Aufstellen einer entsprechenden Vorrichtung wird das Verstellfuß-Oberteil 12 zunächst über die Befestigungsschraube 18 gestülpt. Die Befestigungsschraube 18 wird anschließend so tief in die Gewindebohrung der entsprechenden Vorrichtung eingeschraubt, bis die Unterseite der Vorrichtung an der Oberseite 42 des Verstellfuß-Oberteils 12 anliegt.

Die Höheneinstellung erfolgt dabei durch die Schraubposition des Verstellfuß-Oberteil 12 relativ zum Verstellfuß-Unterteil 14. Je weiter das Verstellfuß-Unterteil 14 aus dem Verstellfuß-Oberteil 12 herausgeschraubt wird, desto größer ist die eingestellte Höhe.

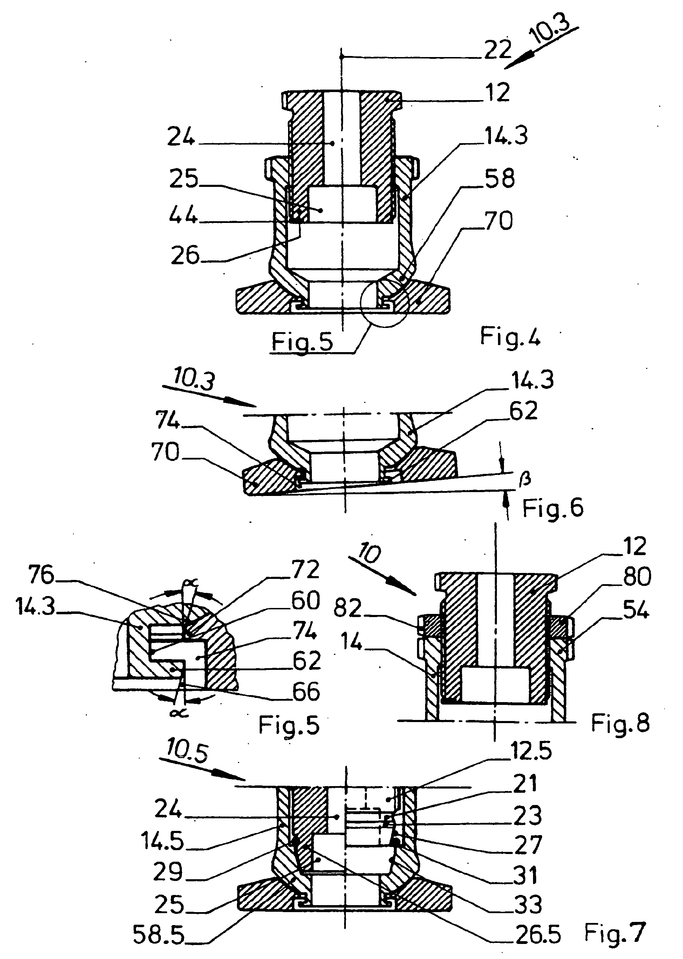

In den Fig. 4 bis 6 ist eine zweite Ausführungsform des erfindungsgemäßen Verstellfußes 10.3 dargestellt, der eine Aufstellung auf einer schiefen, hier nicht dargestellten Oberfläche ermöglicht. Bei dieser Ausführungsform wird im hier vorliegenden Beispielsfall das identische Verstellfuß-Oberteil 12 verwendet, das auch bei der ersten Ausführungsform gemäß der Fig. 1 bis 3 zum Einsatz kommt.

Der untere Bereich 58 des Verstellfuß-Unterteils 14.3 ist jedoch nicht als Stellfläche 16 ausgebildet. Vielmehr ist der untere Bereich 58 konvex ausgebildet. Der untere, konvexe Bereich 58 ist an einem Stellteller 70 befestigt. Der Stellteller 70 kann auf einer hier nicht dargestellten Oberfläche aufgestellt werden.

Um die Befestigung des Verstellfuß-Unterteils 14.3 an dem Stellteller 70 zu gewährleisten (siehe Fig. 5), besitzt das Verstellfuß-Unterteil 14.3 eine zylindrische Ausdrehung 60 mit einem anschließenden Bund 62. Der Stellteller 70 besitzt ebenfalls einen Bund 72 sowie eine Freidrehung 74. Der Durchmesser des Bundes 62 und des Bundes 72 sind im Nenndurchmesser gleich, ihre Toleranzfelder sind jedoch so gewählt, dass ein definiertes Übermaß vorhanden ist. Zur Befestigung des Verstellfuß-Unterteils 14.3 an dem Stellteller 70 wird dieses in den Stellteller 70 von oben eingepresst. Damit beim Pressvorgang das Übermaß zwischen den beiden Bunden 62, 72 überwunden wird, sind jeweils Anfasungen 66, 76 in einem Winkel α angebracht. Nach dem Zusammenpressen kann der Stellteller 70 nicht mehr von dem Verstellfuß-Unterteil 14.3 abfallen; sie bilden somit eine beweglich Einheit.

Bei der Schrägstellung des Stelltellers 70 in einem Winkel β (siehe Fig. 6) kann sich der Bund 62 in dem durch die Freidrehung 74 gebildeten Freiraum bewegen und so eine Nivellierung der aufzustellenden Vorrichtung auch bei unebener oder leicht schräger Oberfläche bei vollständiger Auflage auf der Aufstellfläche ermöglichen.

In Fig. 7 Erfindungsgemäß ist ein gegenüber dem Verstellfuß 10.3 abgewandelter Verstellfuß 10.5 in seinem unteren Bereich dargestellt, der zum Verhindern des ungewollten Herausschraubens des Unterteils aus dem Oberteil statt der Verstemmungen 44 einen Runddraht-Sprengring 29 aufweist.

Im vollständig eingeschraubten Zustand des Oberteils 12.5 in dem Unterteil 14.5 sitzt dieser Sprengring 29 in einer Nut 21, die auf der Außenfläche des unteren Bereichs 26.5 des Oberteils 12.5 umlaufend eingeformt vorhanden ist. Dieser Zustand ist in der linken Hälfte der Fig. 7 dargestellt.

Gemäß des in der rechten Hälfte der Fig. 7 gezeigten Zustandes ist das Oberteil 12.5 erst teilweise in das Unterteil 14.5 eingeschraubt. Der Sprengring 29 liegt dabei auf einer einspringenden Schulter 31 des unteren Bereichs 58.5 des Unterteils 14.5 lose auf.

Unterhalb der Schulter 31 weist die Innenfläche des unteren Bereichs 58.5 des Unterteils 14.5 eine sich nach unten verjüngende Innen-Konusfläche 33 auf. Diese Konusfläche 33 korrespondiert mit der entsprechenden Außen-Konusfläche 27 des oberen Bereichs 26.5 des Oberteils 12.5.

Durch weiteres Einschrauben des Oberteils 12.5 aus seiner in Fig. 7 dargestellten Position in das Unterteil 14.5 hinein gleitet der Sprengring 29 an der Außen-Konusfläche 27nach oben und rutscht in die Nut 21. Ein die Nut 21 unten begrenzender Bund 23 sichert den Sitz des Sprengringes 29 in der Nut 21.

Diese Ausführungsart ermöglicht somit die Montage eines Sicherungs-Ringes, hier beispielsweise eines Runddraht-Sprengringes, in einem von außen schwer zugänglichen Bereich.

In Fig. 8 ist der obere Bereich des Verstellfußes 10 gemäß Fig. 1 bis 3 dargestellt, an dessen Verstellfuß-Oberteil 12 eine Kontermutter 80 aufgeschraubt ist. Die Kontermutter 80 könnte in vergleichbarer Weise auch bei den vorstehenden Ausführungsformen zum Einsatz kommen. Die äußere Gestaltung der Kontermutter 80 entspricht der Gestaltung des Verstellbundes 54 des Verstellfuß-Unterteils 14. Dementsprechend weist die Kontermutter 80 im vorliegenden Beispielsfall vier Nute 82 auf. Die Kontermutter 80 entspricht damit im vorliegenden Beispielsfall einer Norm-Wellenmutter. Mit der Kontermutter 80 wird die eingestellte Höhe des Verstellfußes 10 (beziehungsweise des Verstellfußes 10.3 oder 10.5) durch Verspannen der Gewinde gegeneinander dauerhaft gesichert, insbesondere bei unbeabsichtigten Störungen oder auftretenden Schwingungen.

Im Gegensatz zu den hier dargestellten Ausführungsbeispielen könnte der Verstellbund 54 und/oder die Kontermutter 80 auch als Sechskant oder Vierkant ausgeführt sein.

Im Gegensatz zu den hier dargestellten Ausführungsbeispielen könnte das Verstellfuß-Unterteil auch mit einen Außengewinde und das Verstellfuß-Oberteil mit einem entsprechenden Innengewinde ausgebildet sein. In diesem Fall würde dann das Verstellfuß-Unterteil in das Verstellfuß-Oberteil eingeschraubt werden.

## Patentansprüche

1. Verstellfuß (10.5)
- mit einem Verstellfuß-Oberteil (12.5) mit einer durchgehenden Ausnehmung (24, 25) in Längsrichtung (22), innerhalb der eine Befestigungsschraube (18) zum lösbaren Befestigen des Verstellfuß-Oberteils (12.5) an einer aufzustellenden Vorrichtung positionierbar ist,
- und mit einem Verstellfuß-Unterteil (14.5),
- wobei das Verstellfuß-Unterteil (14.5) und das Verstellfuß-Oberteil (12.5) mittels einer gemeinsamen Verschraubung (20, 52) teleskopartig unterschiedlich weit ineinander verstellbar sind,
- **dadurch gekennzeichnet, dass**
- der untere Bereich (26.5) des Verstellfuß-Oberteils (12.5) eine nach unten hin sich verjüngende Außen-Konusfläche (27) besitzt,
- der untere Bereich (58.5) des Verstellfuß-Unterteils (14.5) eine der Außen-Konusfläche (27) mit Spiel angepasste Innen-Konusfläche (33) besitzt,
- am inneren axialen Ende der Innen-Konusfläche (33), und dort auf der Innenseite, eine Schulter (31) im Verstellfuß-Unterteil (14.5) so vorhanden ist, dass auf dieser Schulter (31) ein Runddraht-Sprengring (29) auflagerbar ist im nicht voll eingeschraubten Zustand des Verstellfuß-Oberteils (12.5) in das Verstellfuß-Unterteil (14.5),
- im vollständig eingeschraubten Zustand des Verstellfuß-Oberteils (12.5) in das Verstellfuß-Unterteil (14.5) der Runddraht-Sprengring (29) in einer auf der Außenseite des Verstellfuß-Oberteils (12.5) vorhandenen Nut (21) einsitzt.

2. Verstellfuß nach Anspruch 1,
- **dadurch gekennzeichnet, dass**
- das Verstellfuß-Oberteil (12.5) ein Außengewinde (20) besitzt,
- das Verstellfuß-Unterteil (14.5) hülsenförmig und mit einem Innengewinde (52) ausgebildet ist.

3. Verstellfuß nach Anspruch 2,
- **dadurch gekennzeichnet, dass**
- die Gewinde (20, 52) des Verstellfuß-Unterteils (14.5) und des Verstellfuß-Oberteils (12.5) jeweils als metrisches Feingewinde ausgebildet sind.

4. Verstellfuß nach nach einem der Ansprüche 2 oder 3,
- **dadurch gekennzeichnet, dass**
- der untere Randbereich (58) des Verstellfuß-Unterteils (14.5) konvex ausgebildet ist und in einem dazu entsprechend konkav ausgebildeten Bereich eines Stelltellers (70) um einen Schwenkwinkel (β) aus der Längsrichtung (22) heraus verschwenkbar einsitzt.

5. Verstellfuß nach Anspruch 4,
- **dadurch gekennzeichnet, dass**
- am unteren Bereich (58) des Verstellfuß-Unterteils (14.5) eine zylindrische Ausdrehung (60) mit endseitig auskragendem Bund (62) vorhanden ist,
- am konkaven Bereich des Stelltellers (70) ein Bund (72) mit einer Freidrehung (74) vorhanden ist.

6. Verstellfuß nach Anspruch 5,
- **dadurch gekennzeichnet, dass**
- der Bund (62) des Verstellfuß-Unterteils (14.5) und der Bund (72) des Stelltellers (70) etwa den gleichen Nenndurchmesser aufweisen.

7. Verstellfuß nach Anspruch 5 oder 6,
- **dadurch gekennzeichnet, dass**
- der Bund (62) des Verstellfuß-Unterteils (14.5) und der Bund (72) des Stelltellers (70) jeweils eine Anfasung (66, 76) aufweisen.

8. Verstellfuß nach einem der vorstehenden Ansprüche
- **dadurch gekennzeichnet, dass**
- das Verstellfuß-Unterteil (14.5) und das Versteilfuß-Oberteil (12.5) mittels zumindest einer Kontermutter (80) lösbar aneinander befestigbar sind.

## Claims

1. Adjusting foot (10.5)
- having a top adjusting foot part (12.5) having a continuous recess (24, 25) in the longitudinal direction, inside which recess (24, 25) a fastening screw (18) for releasably fastening the top adjusting foot part (12.5) to an apparatus to be installed is positionable,
- and having a bottom adjusting foot part (14.5),
- wherein the bottom adjusting foot part (14.5) and the top adjusting foot part (12.5) are telescopically adjustable to different extents in one another by means of a common screw connection (20, 52),
- **characterized in that**
- the bottom region (26.5) of the top adjusting foot part (12.5) has a downwardly narrowing external conical face (27),
- the bottom region (58.5) of the bottom adjusting foot part (14.5) has an internal conical face (33) that matches the external conical face (27) with a clearance,
- at the inner axial end of the internal conical face (33), and at that point on the inner side, a shoulder (31) is present in the bottom adjusting foot part (14.5) such that a round-wire snap ring (29) is supportable on this shoulder (31) when the top adjusting foot part (12.5) is in the state not fully screwed into the bottom adjusting foot part (14.5),
- when the top adjusting foot part (12.5) is in the state fully screwed into the bottom adjusting foot part (14.5), the round-wire snap ring (29) fits in a groove (21) present on the outer side of the top adjusting foot part (12.5).

2. Adjusting foot according to Claim 1,
- **characterized in that**
- the top adjusting foot part (12.5) has an external thread (20),
- the bottom adjusting foot part (14.5) is formed in a sleeve-like manner and with an internal thread (52).

3. Adjusting foot according to Claim 2,
- **characterized in that**
- the threads (20, 52) of the bottom adjusting foot part (14.5) and of the top adjusting foot part (12.5) are each formed as a metric fine thread.

4. Adjusting foot according to either of Claims 2 and 3,
- **characterized in that**
- the bottom peripheral region (58) of the bottom adjusting foot part (14.5) is formed in a convex manner and fits in a region, formed in a correspondingly concave manner, of a support plate (70) so as to be pivotable through a pivot angle (β) out of the longitudinal direction (22).

5. Adjusting foot according to Claim 4,
- **characterized in that**
- a cylindrical turned recess (60) having a collar (62) projecting at the end side is present in the bottom region (58) of the bottom adjusting foot part (14.5),
- a collar (72) having an undercut (74) is present in the concave region of the support plate (70).

6. Adjusting foot according to Claim 5,
- **characterized in that**
- the collar (62) of the bottom adjusting foot part (14.5) and the collar (72) of the support plate (70) have approximately the same nominal diameter.

7. Adjusting foot according to Claim 5 or 6,
- **characterized in that**
- the collar (62) of the bottom adjusting foot part (14.5) and the collar (72) of the support plate (70) each have a chamfer (66, 76).

8. Adjusting foot according to one of the preceding claims,
- **characterized in that**
- the bottom adjusting foot part (14.5) and the top adjusting foot part (12.5) can be fastened releasably together by means of at least one locknut (80).

## Revendications

1. Pied de réglage (10.5)
- avec une partie supérieure de pied de réglage (12.5) dotée d'un évidement continu (24, 25) en direction longitudinale (22), à l'intérieur duquel peut être positionnée une vis de fixation (18) pour la fixation amovible de la partie supérieure de pied de réglage (12.5) à un dispositif à mettre en place,
- et avec une partie inférieure de pied de réglage (14.5),
- sachant que la partie inférieure de pied de réglage (14.5) et la partie supérieure de pied de réglage (12.5) peuvent, au moyen d'un assemblage vissé commun (20, 52), être réglées télescopiquement l'une dans l'autre avec une ampleur variable,
**caractérisé en ce que**
- la région inférieure (26.5) de la partie supérieure de pied de réglage (12.5) possède une surface conique extérieure (27) allant en se rétrécissant vers le bas,
- la région inférieure (58.5) de la partie inférieure de pied de réglage (14.5) possède une surface conique intérieure (33) adaptée avec jeu à la surface conique extérieure (27),
- à l'extrémité axiale intérieure de la surface conique intérieure (33), sur le côté intérieur, un épaulement (31) est présent dans la partie inférieure de pied de réglage (14.5) de telle sorte qu'un jonc d'arrêt (29) en fil métallique de section circulaire peut être posé sur cet épaulement (31) dans l'état non totalement vissé de la partie supérieure de pied de réglage (12.5) dans la partie inférieure de pied de réglage (14.5),
- dans l'état totalement vissé de la partie supérieure de pied de réglage (12.5) dans la partie inférieure de pied de réglage (14.5), le jonc d'arrêt (29) en fil métallique de section circulaire est logé dans une rainure (21) présente sur le côté extérieur de la partie supérieure de pied de réglage (12.5).

2. Pied de réglage selon la revendication 1, **caractérisé en ce que**
- la partie supérieure de pied de réglage (12.5) possède un filetage extérieur (20),
- la partie inférieure de pied de réglage (14.5) est réalisée en forme de manchon et pourvue d'un filetage intérieur (52).

3. Pied de réglage selon la revendication 2, **caractérisé en ce que** les filetages (20, 52) de la partie inférieure de pied de réglage (14.5) et de la partie supérieure de pied de réglage (12.5) sont réalisés chacun sous la forme d'un filetage fin métrique.

4. Pied de réglage selon la revendication 2 ou 3, **caractérisé en ce que** la région de bord inférieure (58) de la partie inférieure de pied de réglage (14.5) est réalisée convexe et est logée, avec possibilité de pivotement autour d'un angle de pivotement (β) hors de la direction longitudinale (22), dans une région d'un plateau de pose (70) qui est réalisée avec une concavité correspondante.

5. Pied de réglage selon la revendication 4, **caractérisé en ce que**
- un évidement cylindrique (60), pratiqué au tour et doté d'un collet (62) en saillie à l'extrémité, est présent sur la région inférieure (58) de la partie inférieure de pied de réglage (14.5),
- un collet (72) doté d'un dégagement (74) pratiqué au tour est présent sur la région concave du plateau de pose (70).

6. Pied de réglage selon la revendication 5, **caractérisé en ce que** le collet (62) de la partie inférieure de pied de réglage (14.5) et le collet (72) du plateau de pose (70) présentent approximativement le même diamètre nominal.

7. Pied de réglage selon la revendication 5 ou 6, **caractérisé en ce que** le collet (62) de la partie inférieure de pied de réglage (14.5) et le collet (72) du plateau de pose (70) présentent chacun un chanfreinage (66, 76).

8. Pied de réglage selon l'une des revendications précédentes, **caractérisé en ce que** la partie inférieure de pied de réglage (14.5) et la partie supérieure de pied de réglage (12.5) peuvent être fixées l'une à l'autre de manière amovible au moyen d'au moins un contre-écrou (80).
